# EUROPÄISCHE PATENTANMELDUNG

(11) **EP 0 764 832 A2**
(43) Veröffentlichungstag der Anmeldung: **26.03.1997**
(21) Anmeldenummer: 96112738.8
(22) Anmeldetag: 07.08.1996
(51) Int. Cl.: G01F 1/10, G01F 1/06

(54) **Mengenzähler für fliessfähige Medien**

(30) Priorität: 22.09.1995 DE 19535281
(71) Anmelder: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(57) **Zusammenfassung**

Mengenzähler für fließfähige Medien mit einem Gehäuse (2,3) und einem Flügelrad (7), für das wenigstens ein Flügelradlager vorgesehen ist, das einen Lagerstift (16,17) und eine mit dessen Umfang zusammenwirkende Lagerbohrung (12,13) sowie eine der als Lagerfläche ausgebildeten Stirnfläche (18) des Lagerstifts zusammenwirkende Hartstoffkugel (20) umfaßt. Zur Verringerung des Herstellungs- und Montageaufwands bei geringer Anlaufreibung ist die Stirnfläche (18) des Stifts (16,17) konkav ausgebildet.

## Beschreibung

Die Erfindung bezieht sich auf einen Mengenzähler für fließfähige Medien mit einen Gehäuse und einem Flügelrad, für das wenigstens ein Flügelradlager vorgesehen ist, das einen Lagerstift und eine mit dessen Umfang zusammenwirkende Lagerbohrung sowie eine mit der als Lagerfläche ausgebildeten Stirnfläche des Lagerstifts zusammenwirkende Hartstoffkugel umfaßt. Bei einem bekannten Mengenzähler der genannten Art (DE-C 3415366) ist die stirnseitige Lagerfläche des Lagerstifts eben oder ein wenig konvex ausgeführt. Nur Axialkräfte können über diese Fläche übertragen werden. Die radialen Lagerkräfte werden ausschließlich über die Lagerbohrung und die damit zusammenwirkende Umfangsfläche des Lagerstifts übertragen. Dies hat den Nachteil, daß die Anlaufreibung verhältnismäßig groß ist, die maßgebend ist für die Klasseneinstufung von Wasser- und Gaszählern. Für hochwertige Zähler verwendet man deshalb Spitzenlagerungen, bei denen die Spitze eines mit dem Flügelrad verbundenen Lagerstifts in die konkave Lagerfläche (Kalotte) eines gehäuseseitig angeordneten Lagersteins eingreift, der in der Regel aus Saphir besteht. Die Fertigung des Lagersteins ist aufwendig. Auch kann es bei einem Montageversehen geschehen, daß er umgekehrt eingebaut wird, wodurch zum einen die Zentrierung des Lagerstifts zumindest verschlechtert wird und zum anderen ein Teil des Axialspiels unter entsprechender Vergrößerung der Reibung verlorengeht. Auch kann es geschehen, daß der Lagerstein schief eingebaut wird, was gleichfalls zu Lagerungsfehlern führt. Noch aufwendiger ist die Fertigung einer bekannten Lagerung (patent abstracts of Japan 7103794), bei der die Spitze der Flügelradachse ersetzt ist durch eine stirnseitig eingelassene Saphirkugel, die ebenfalls mit einer Hartstoff-Kalotte zusammenwirkt. Auch haben alle Ausführungen, bei denen eine Spitze oder eine Kugel mit einer Kalotte zusammenwirken, den Nachteil, daß sie empfindlich gegenüber druck- oder temperaturbedingten Änderungen des Lagerspiels reagieren und ihre Belastung mit der vollen Axialkraft zu Verschleiß führt, der nach einer gewissen Betriebszeit die Anlaufreibung hochschnellen läßt und dadurch die Klasseneinstufung gefährdet.

Der Erfindung liegt die Aufgabe zugrunde, einen Mengenzähler der im Gattungsbegriff des Anspruchs 1 genannten Art zu schaffen, die bei hoher Lagerqualität weniger aufwendig ist und keine hohen Anforderungen an die Montageaufmerksamkeit und die Konstanz der Betriebsverhältnisse stellt.

Die erfindungsgemäße Lösung besteht in den kennzeichnenden Merkmalen des Anspruchs 1.

Das Zusammenwirken der kalottenförmig geschliffenen Stirnfläche des Stifts mit der Kugel ergibt die Reibungsarmut und Lagergenauigkeit einer Spitzenlagerung, wenn keine oder geringe radiale Kräfte auf das Flügelrad wirken, wie es im Anlaufzustand der Fall ist. Der Umfang des Stifts und der Lagerbohrung kommt in diesem Zustand nicht oder kaum zu Tragen und wirkt sich daher auf die Reibung nicht aus. Wenn bei größerem Durchfluß die Radialkräfte beträchtlich werden, übernehmen zwar diese Umfangsflächen die Radiallagerfunktion. Jedoch ist bei größeren Durchflußmengen die dadurch ein wenig höhere Reibung nicht von Belang.

Damit die von dem Stift und der Kugel gebildete Lagerung im Anlaufzustand wirksam wird, soll Vorsorge dafür getroffen sein, daß diese Teile im Ruhe- und Anlaufzustand axial aneinander liegen. Dies kann auf einfache Weise dadurch geschehen, daß die zwei Flügelradlager in gleicher Weise je aus einem Stift und aus einer Kugel aufgebaut sind. Wenn im Ruhe- und Anlaufzustand beträchtliche Axialkräfte wirken, beispielsweise aufgrund der Schwerkraft oder aufgrund magnetischer Kupplungseinrichtungen, sollte dasjenige Lager, daß durch diese Kräfte axial belastet wird, die Stift-Kugel-Paarung aufweisen. Eine vorteilhafte Ausführungsform der Erfindung ist dadurch gekennzeichnet, daß das Zählwerk trockenlaufend und magnetisch mit dem Flügelrad gekuppelt ist und daß wenigstens das dem Zählwerk nähere Lager des Flügelrads in der angegebenen Weise ausgebildet ist.

Die erfindungsgemäße Lagerung ist in der Herstellung wesentlich weniger aufwendig als die bekannten Lager, bei denen ein konkaver Lagerstein geschliffen werden muß. Auch dann, wenn der stirnseitig konkav geschliffene Lagerstift aus weniger hartem Werkstoff besteht, ist hinreichende Langzeit-Lagerqualität gewährleistet, weil die Radialkräfte, sobald sie ein gewisses Mindestmaß übersteigen, nicht von der konkav geschliffenen Endfläche des Stifts, sondern von dessen Umfang übertragen werden. An die Montagesorgfalt stellt sie geringe Anforderungen, weil sie keiner bestimmten Orientierung bedarf. Der Lagerstift kann wie bisher aus hartem Werkstoff, beispielsweise geeignetem Stahl oder Hartmetall bestehen.

Vorzugsweise ist das Flügelrad mit zwei Lagern gleichen Typs versehen. Unbedingt erforderlich ist dies jedoch nicht. Wenn im Ruhe- und Anlaufzustand eines der beiden Lager axial belastet ist, während bei höherem Durchfluß das andere Lager aixal belastet ist, sollte das erstgenannte erfindungsgemäß ausgebildet sein, während für die andere Lagerung eine abweichende, weniger aufwendige Konstruktion genügt.

Nach einem besonderen Merkmal der Erfindung ist der dem Zählwerk zugewandte Lagerstift durch die das Zählwerk von dem Flügelrad trennende Druckplatte dicht hindurchgeführt und ist sein zählwerkseitiges Ende an der Bildung des zählwerkseitigen Lagers beteiligt. Dadurch erhält man Gewähr dafür, daß die flügelradseitige Lagerung und die zählwerkseitige Lagerung in demjenigen Bereich, in welchem die Drehkupplung zwischen Flügelrad und Zählwerk zustande kommt, genau fluchten. Dabei kann das zählwerkseitige Lager ähnlich dem Flügelradlager ausgebildet sein, nämlich unter Ausnutzung der konkaven Stirnfläche des Stifts als Lagerfläche, die mit einer Lagerkugel zusammenwirkt. Erforderlich ist dies aber nicht. In jedem Falle ist es zweckmäßig, auch die dem Flügelrad abgewandten Enden der Lagerstifte mit einer Lagerfläche zu versehen, die mit derjenigen ihres flügelradseitigen Endes übereinstimmt, damit es bei der Montage gleichgültig ist, in welcher Richtung sie eingesetzt werden und entsprechende Montagefehler von vornherein ausgeschlossen sind. Auch eröffnet dies die Möglichkeit, die Stifte im Falle eines Verschleißes ihrer flügelradseitigen Lagerfläche zu wenden.

Nach einem besonderen Merkmal der Erfindung weist die Flügelradnabe wenigstens zwei in Bereichen unterschiedlichen Drucks liegende Öffnungen auf, die miteinander über wenigstens einen an den Lagerflächen vorbeiführenden Kanal verbunden sind. Dadurch stellt sich während des Betriebs ein die Lagerflächen benetzender Mediumstrom ein, der etwaige Lufteinschlüsse vertreibt. Besonders vorteilhaft ist es, wenn eine der beiden erwähnten Öffnungen von der Lagerbohrung gebildet ist, so daß der Lagerstift allseits von Flüssigkeit umströmt ist.

Die die Lagerflächen bildenden, aus hartem Werkstoff bestehenden Lagerteile sind in der Regel stoßempfindlich. Es ist deshalb vorteilhaft, wenigstens einen von ihnen elastisch nachgiebig anzuordnen. Die Nachgiebigkeit braucht nicht sehr groß zu sein, weil schon geringe Ausweichmöglichkeiten die im Falle von Stoß oder Vibration zwischen der Stirnfläche des Stifts und der Lagerkugel auftretenden Kräfte auf ein zulässiges Maß senken. Die Wirksamkeit dieser Maßnahmen zeigt sich zum einen im geringeren Verschleiß der Lagerflächen und zum anderen in einer Verringerung der Vibrationsgeräusche, die andernfalls unter ungünstigen Betriebsbedingungen vom Zähler ausgehen können.

Nach einem weiteren Merkmal der Erfindung kann der Herstellungs- und Montageaufwand bei hoher Lagerqualität weiter dadurch vermindert werden, daß der Lagerstift einstückig mit dem Gehäuse ausgebildet ist, indem er insbesondere zusammen mit diesem in einem Guß-, Spritz- oder Preßverfahren geformt wird. Das gilt insbesondere dann, wenn er zusammen mit dem Gehäuse oder einem Teil des Gehäuses aus faserverstärktem Polymermaterial besteht.

Schließlich kann nach der Erfindung die Lagerqualität weiter dadurch verbessert werden, daß der Lagerstift mit einer gewissen Mindestrauhigkeit der Umfangfläche versehen wird, die vorzugsweise mindestens 5µ beträgt. Dadurch ergibt sich nämlich eine hydrodynamische Schmierwirkung. Da dies die Beanspruchung der Gegenfläche erhöht, insbesondere wenn der Stift aus faserverstärktem Polymermaterial besteht, wird die Lagerbohrung zweckmäßigerweise von einer Hartstoffbuchse, biespielsweise aus Hartmetall, gebildet.

Der erfindungsgemäße Zähler ist vornehmlich als Flüssigkeitszähler, insbesondere für das öffentliche Wassernetz, geeignet. Er ist unempfindlich gegenüber hohen oder wechselnden Mediumstemperaturen. Er kann auch als Gaszähler Verwendung finden.

Die Erfindung wird im folgenden näher unter Bezugnahme auf die Zeichnungen erläutert, die zwei vorteilhafte Ausführungsbeispiele veranschaulichen. Es zeigen:
- Fig. 1: einen Axialschnitt durch den Bereich der Flügelrad- und Zählwerkslagerung einer ersten Ausführungsform und
- Fig. 2: die entsprechende Schnittansicht einer zweiten Ausführungsform.

Der mediumsdurchströmte Arbeitsraum des Flügelrads 1 wird von Druckplatten 2,3 eines Gehäuses eingeschlossen, welches die mediumsberührten Teile und insbesondere das Flügelrad von dem Zählwerk trennt. Dieses ist in einem besonderen Gehäuse eingeschlossen, von dem der Zählwerksbecher 5 in der Zeichnung erkennbar ist, der durch einen O-Ring 6 gegenüber der Druckplatte 3 abgedichtet ist. Das Flügelrad 1 besitzt einen Nabenkörper 7, der zählwerkseitig Magnete oder andere Kupplungselemente 8 enthält, die durch einen ersten Lagereinsatz 9 und einen zweiten Lagereinsatz 10 festgehalten sind, die im Nabenkörper 7 genau zentriert und durch Rastzungen 11 axial fixiert sind. Die Lagereinsätze 9,10 bilden an ihren Enden Lagerbohrungen 12,13. Die Lagereinsätze oder darin vorgesehenen nicht dargestellte Lagerbuchsen bestehen aus gleitgünstigem und verschleißbeständigem Material, beispielsweise graphit- oder kohlefaserhaltigem Kunststoff, Sintermaterial, Hartmetall oder synthetischem Edelstein. In fluchtende Bohrungen 14,15 der Druckplatten 2,3 sind Lagerstifte 16,17 dicht und fest eingepreßt, deren flügelradseitige Enden in den Lagerbohrungen 12,13 liegen. Die Lagerstifte 16,17 bestehen aus hartem Metall oder Hartmetall oder vergleichbarem verschleißbeständigem Werkstoff. Die beiden Stirnflächen 18 jedes Lagerstifts 16,17 sind zur Bildung einer Lagerkalotte konkav geschliffen. In den Lagerbohrungen 12,13 ist jeweils eine Lagerkugel 19,20 zentriert angeordnet, die die mit der Lagerkalotte 18 zusammenwirkende Lagerfläche bildet und gleichfalls aus hartem Werkstoff, insbesondere Saphir, besteht. In den einander zugewendeten Abschnitten der Lagerbohrungen 12,13 liegen die stiftförmigen Enden 21,22 eines elastischen Körpers, der beispielsweise aus weich eingestelltem Polyurethan oder Silikonkautschuk besteht und der einen mittleren Kragen 23 aufweist, mit dem er zwischen den ihm zugewendeten Enden der Lagereinsätze 9,10 festgehalten ist. Der elastische Körper ist so bemessen, daß er die Position der Lagerkugeln 19,20 an der vorgesehenen Stelle bestimmt. Dank seiner Elastizität können sie im Falle einer Stoßbeanspruchung axial nachgeben und anschließend wieder in die vorgesehene Position gelangen.

Mindestens im Bereich der Lagerkugeln 19,20 und in ihren weiter innen liegenden Abschnitten sind die Lagerbohrungen 12, 13 mit Längsnuten 24 versehen. Diese stehen über verschiedene, aus der Zeichnung ersichtliche Räume und Bohrungen innerhalb der Flügelradnabe mit den Öffnungen zwischen den Rastzungen 11 in Strömungsverbindung. Während des Betriebs stellt sich zwischen diesen Öffnungen und den äußeren Mündungen der Lagerbohrungen 12,13 wegen deren unterschiedlichen Abstands von der Drehachse ein Druckunterschied ein, der zu einer Durchströmung führt, die die von den Kalotten 18 und den Kugeln 19,20 gebildeten Lagerflächen kühlt und schmiert. Sie sorgt auch dafür, daß im Falle eines Flüssigkeitszählers etwaige Gasblasen, die die Schmierung der Lagerflächen beeinträchtigen könnten, aus dem Lagerbereich vertrieben werden.

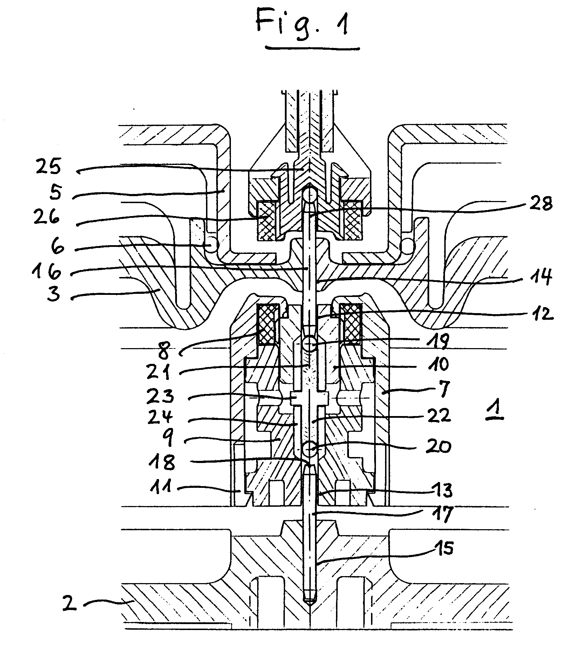

In der Ausführung gemäß Fig.1 sind die Kupplungselemente 8 der Flügelradnabe als Magnete ausgebildet. In dem zugehörigen Zählwerkteil 25 sind als Kupplungselemente ebenfalls Magnete 26 vorgesehen. Durch das Zusammenwirken dieser Magnete wird das Flügelrad 1 zur Zählwerksseite gezogen, so daß die von dem Lagerstift 16 und der Lagerkugel 19 gebildete Lagerung mindestens im Ruhe- und Anlaufzustand einer Axialkraft ausgesetzt ist, durch die sie in axialer Anlage gehalten wird. Das Zusammenwirken der Lagerkugel 19 mit der Lagerkalotte 18 des Lagerstifts 16 bestimmt die Drehachse des Flügelrads und zentriert es. Die zählwerkabgewandte Lagerung, die den Lagerstift 17 und die Lagerkugel 20 umfaßt, hat im Ruhezustand zweckmäßigerweise einige Zehntel Millimeter Spiel.

In der Ausführung gemäß Fig.1 beteiligt sich das zählwerkseitige Ende 28 des abgedichtet und axial festliegend durch die Druckplatte 3 geführten Lagerstifts 16 an der Lagerung des Zählwerkteils 25. Die Flügelradnabe und das damit gekuppelte Teil 25 des Zählwerks sind daher mit Sicherheit fluchtend angeordnet. Das zählwerkseitige Lager kann ebenso ausgeführt sein wie dies zuvor für die in der Flügelradnabe befindlichen Lager beschrieben wurde. Daher sind auch die beiden Enden des Lagerstifts 16 identisch ausgeführt, so daß es bei der Montage ohne Belang ist, in welcher Richtung der Stift eingebaut ist. Ein Montagefehler durch falsch gerichteten Einbau des Lagerstifts 16 ist daher nicht möglich. Aus dem gleichen Grunde ist es zweckmäßig, auch den Lagerstift 17 an beiden Enden gleich auszuführen, obwohl an seinem druckplattenseitigen Ende eine Lagerfunktion nicht vorgesehen ist.

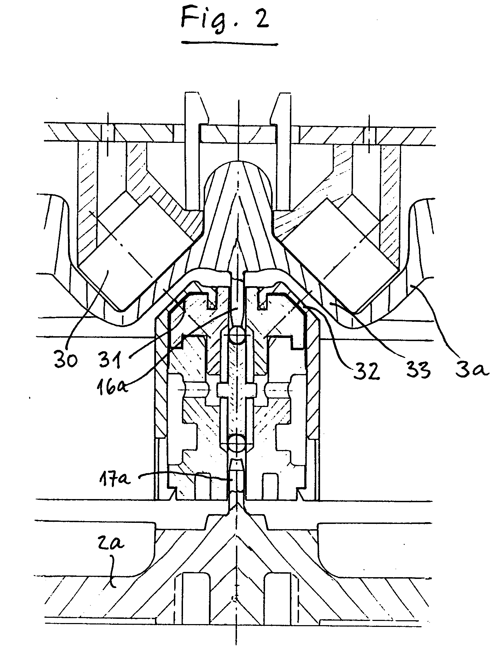

Die Ausführung gemäß Fig.2 unterscheidet sich von derjenigen gemäß Fig.1 dadurch, daß die Lagerstifte 16a, 17a mit den jeweils zugehörigen Druckplatten 2a, 3a einstückig aus faserverstärktem Kunststoff, Bronze, Messing oder dergleichen hergestellt sind. Lediglich ihre kalottenförmigen Stirnflächen sind spanhebend bearbeitet. Ihre Umfangsflächen weisen die Herstellungsrauhigkeit auf, die auf einen Wert über 5 und unter 50µ eingestellt ist. Bezogen auf den Stiftdurchmesser liegt die Rauhtiefe zweckmäßigerweise zwischen 0,3 und 5µ. Die Gedanken dieses Absatzes und der entsprechenden Ansprüche 8 und 10-12 verdienen ggf. Schutz unabhängig von den Merkmalen der übrigen Ansprüche.

Ferner zeichnet sich diese Ausführungsform dadurch aus, daß zählwerkseitig kein mit der Flügelradnabe gekuppeltes, drehbares Teil vorgesehen ist. Statt dessen sind zählwerkseitig Sensoren 30 vorgesehen, die den Umlauf von in der Zeichnung nicht näher dargestellten Kuppelelementen 31 in der Flügelradnabe beispielsweise induktiv abtasten. Diese Elemente sind halbaxial, nämlich unter 45° zur Drehachse des Flügelrads, angeordnet. Der entsprechende Teil 33 der Druckplatte 3 und der ihm gegenüberliegende Nabenkopf 32 sind entsprechend konisch ausgeführt. Im übrigen gilt die Beschreibung der ersten Ausführungsform auch für die zweite.

Die Konkavität kann in die Stirnfläche des Stifts eingeschliffen werden. Erfindungsgemäß zweckmäßiger ist es, sie durch Druck einer Kugel aus entsprechend härterem Material einzudrücken oder einzuschlagen. Dadurch erreicht man nicht nur eine Vereinfachung des Vorgangs, sondern auch eine höhere Oberflächenqualität und Oberflächenhärte. Damit das an sich schon hart gewählte Material des Stifts unter der Verformung nicht bricht, ist es zweckmäßig, den Durchmesser der Konkavität geringer als den des Stift zu wählen, nämlich zweckmäßigerweise nicht größer als das 0,5fache des Stiftdurchmessers. Zwar verringert sich dabei entsprechend auch die Flankensteilheit der Konkavität, so daß deren Führungseigenschaften verschlechtert werden; da diese aber ohnehin nur während des Anlaufzustands verlangt werden, kann dies in Kauf genommen werden. Der Durchmesser der zum Eindrücken der Konkavität verwendeten Kugel ist zweckmäßigerweise etwa 2- bis 4-mal so groß wie der Stiftdurchmesser. Der Durchmesser der Lagerkugel ist etwa ebenso groß wie der des Stifts oder ein wenig größer. In einem praktisch bewährten Beispiel betragen diese Durchmesser (in mm):

| | |
|---|---|
| Stift: | 1,0 |
| Lagerbuchse: | 1,15 |
| Lagerkugel: | 1,2 |
| Eindrückkugel: | 3,0 |
| Konkavität: | 0,25 bis 0,3 |

Diese sehr kleine und flache Konkavität genügt, um im Stillstand den Kontakt des Stifts mit der Innenfläche der Lagerbuchse aufzuheben und in Anlaufreibung entscheidend zu verringern.

## Patentansprüche

1. Mengenzähler für fließfähige Medien mit einem Gehäuse, einem Flügelrad für das wenistens ein Flügelradlager vorgesehen ist, das einen Lagerstift und eine mit dessen Umfang zusammenwirkende Lagerbohrung sowie eine mit der als Lagerfläche ausgebildeten Stirnfläche des Lagerstifs zusammenwirkende Hartstoffkugel umfaßt, dadurch gekennzeichnet, daß die Stirnfläche (18) des Stifts konkav ausgebildet ist.

2. Zähler nach Anspruch 1, dadurch gekennzeichnet, daß die Lagerbohrung (12,13) in der Flügelradnabe und der Lagerstift (16,17) am Gehäuse angeordnet sind.

3. Zähler nach Anspruch 1 oder 2, dadurch gekennzeichnet, daß das Zählwerk trockenlaufend und magnetisch mit dem Flügelrad gekuppelt ist und daß wenigstens das dem Zählwerk nähere Lager des Flügelrads in der angegebenen Weise ausgebildet ist.

4. Zähler nach einem der Ansprüche 1 bis 3, dadurch gekennzeichnet, daß die Flügelradnabe wenigstens zwei in Bereichen unterschiedlichen Drucks liegende Öffnungen aufweist, die miteinander über wenigstens einem an den Lagerflächen vorbeiführenden Kanal (24) verbunden sind.

5. Zähler nach Anspruch 4, dadurch gekennzeichnet, daß eine dieser Öffnungen von der Lagerbohrung (12,13) gebildet ist.

6. Zähler nach einem der Ansprüche 1 bis 5, dadurch gekennzeichnet, daß die Lagerkugel (19,20) elastisch nachgiebig abgestützt ist.

7. Zähler nach einem der Ansprüche 2 bis 6, dadurch gekennzeichnet, daß der zählwerkseitige Lagerstift (16) durch die das Zählwerk von dem Flügelrad (1) trennende Druckplatte (3) dicht hindurchgeführt ist und sein zählwerkseitiges Ende (28) an der Bildung des zählwerkseitigen Lagers beteiligt ist.

8. Zähler nach einem der Ansprüche 1 bis 7, dadurch gekennzeichnet, daß der Lagerstift (16a,17a) einstückig mit dem Gehäuse ausgebildet ist.

9. Zähler nach einem der Ansprüche 1 bis 8, dadurch gekennzeichnet, daß der Lagerstift (16,17) an seinem der Hartstoffkugel (19) abgewandten Ende mit einer mit seinem der Hartstoffkugel (19) zugewandten Ende übereinstimmenden Lagerfläche (18) versehen ist.

10. Zähler nach einem der Ansprüche 1 bis 9, dadurch gekennzeichnet, daß die Konkavität in der Stirnfläche (18) des Stifts spanlos eingedrückt ist.

11. Zähler nach einem der Ansprüche 1 bis 10, dadurch gekennzeichnet, daß der Durchmesser der Konkavität in der Stirnfläche (18) des Stifts nicht größer als der 0,5fache Durchmesser des Stifts ist.

12. Zähler nach einem der Ansprüche 1 bis 11, dadurch gekennzeichnet, daß die mit der Lagerbohrung zusammenwirkende Umfangsfläche des Lagerstifts eine Rauhigkeit von mindestens 5µ aufweist.

13. Zähler nach einem der Ansprüche 1 bis 12, dadurch gekennzeichnet, daß der Lagerstift aus faserverstärktem Polymermaterial besteht.

14. Zähler nach einem der Ansprüche 9 bis 13, dadurch gekennzeichnet, daß die Lagerbohrung von einer Hartstoffbuchse gebildet ist.
